# EUROPÄISCHE PATENTSCHRIFT

(11) **EP 2 185 388 B1**
(45) Veröffentlichungstag und Bekanntmachung des Hinweises auf die Patenterteilung: **02.11.2011**
(21) Anmeldenummer: 08829017.6
(22) Anmeldetag: 28.08.2008
(51) Int. Cl.: B60S 1/08

(54) **SENSORMODUL**
SENSOR MODULE
MODULE CAPTEUR

(30) Priorität: 07.09.2007 DE 102007042694
(43) Veröffentlichungstag der Anmeldung: 19.05.2010
(73) Patentinhaber: Magna Electronics Europe GmbH & Co. KG, 63877 Sailauf (DE)
(72) Erfinder: STEGMANN, Rainer, 63768 Hösbach (DE); HERIBERT, Werner, 63796 Kahl (DE)
(74) Vertreter: Völger, Silke Beatrix
(86) Internationale Anmeldenummer: PCT/DE2008/001421
(87) Internationale Veröffentlichungsnummer: WO 2009/030198

(56) Entgegenhaltungen:
- EP-A- 0 803 414
- DE-C1- 19 753 879

## Beschreibung

Die Erfindung betrifft ein Sensormodul, welches im Bereich einer Scheibe eines Kraftfahrzeugs angeordnet werden kann.

Derartige Sensormodule können für verschiedene Funktionen, beispielsweise zur Sensierung des Regens, des Beschlags oder des Lichts eingesetzt werden. In einem Sensormodul können auch mehrere Funktionen integriert sein. Regensensormodule werden zur automatischen Steuerung der Scheibenwischer von Kraftfahrzeugen eingesetzt. Der Regensensor ist dabei in dem Kraftfahrzeug an der Innenseite der Windschutzscheibe angebracht und misst in diesem Bereich die Benetzung des Messfeldes durch Feuchtigkeit und Regentropfen auf der Außenseite der Windschutzscheibe.

Für die Befestigung der Sensoren im Bereich der Windschutzscheibe sind unterschiedliche Befestigungsstellen und Befestigungsarten bekannt. Es ist bekannt, die Sensoren im Befestigungssockel des Innenrückspiegels im oberen Bereich der Windschutzscheibe zu integrieren.

Eine im Befestigungssockel integrierte Anordnung ist aus der DE 10 2004 007 516 A1 bekannt. Zur Erzielung einer exakten Zuordnung der Bauteile sind Mittel zur definierten gegenseitigen Zuordnung von Montagepositionen der beiden Bauteile an der Scheibe vorgesehen. Bei der Montage der beiden Bauteile wird dabei zunächst ein Sensorrahmen des Sensormoduls auf der Windschutzscheibe verklebt, und anschließend wird der Befestigungssockel über das Sensormodul gestülpt und ebenfalls mit der Scheibe verklebt. Eine Verklebung der Sensoren mit der Innenseite der Windschutzscheibe von Kraftfahrzeugen ist allerdings mit einigen Nachteilen behaftet.

Eine derartige Befestigung der Sensoren an der Windschutzscheibe erfordert hohe Montagezeiten. Des Weiteren können Montagefehler durch eine Veränderung der beabsichtigten Klebeposition der Windschutzscheibe zur Fahrzeugkarosse auftreten.

Ein Nachteil der Verklebung des Befestigungssockels sowie des Sensors mit der Windschutzscheibe besteht zusätzlich darin, dass die Verklebung z.B. im Wartungsfall nicht zerstörungsfrei gelöst werden kann.

Aus der DE 101 27 070 A1 ist eine Innenspiegelanordnung mit einem im Befestigungssockel integrierten Sensor bekannt, die eine Führungsvorrichtung aufweist, welche einerseits mit dem Sensor und andererseits mit einem Stellelement verbunden ist. Bei der Endmontage wird hier durch eine Bewegung des Stellelements der Sensor an der Innenseite der Windschutzscheibe positioniert. Eine Verklebung der Sensorfläche ist bei dieser Anordnung nicht vorgesehen.

Aus der DE 197 11 374 A1 ist ein Innenlichtmodul mit Regensensor bekannt, wobei der Regensensor im Gehäuse des Innenlichtmoduls integriert ist. Zur Erzielung einer guten Anlage des Regensensors ist der Regensensor in einer Ausnehmung des Modulgehäuses senkrecht zur Scheibeninnenfläche verschiebbar aufgenommen und wird über ein Federelement an die Innenfläche der Windschutzscheibe gedrückt. Ein gafingsgemäßes sensormodue ist aus der EP 0 803 414 A1 bekannt.

Aufgabe der vorliegenden Erfindung ist es, ein Sensormodul, welches zur Befestigung im Bereich einer Scheibe eines Kraftfahrzeugs vorgesehen ist, derart weiterzubilden, dass eine vereinfachte Montage ermöglicht wird und bei der Befestigung eine Beschädigung des Sensors möglichst ausgeschlossen werden kann.

Diese Aufgabe wird durch die im Anspruch 1 angegebenen Merkmale gelöst. Aufgrund der Anordnung eines Verzögerungselementes und der Arretierung des Sensors in einer ersten Ausgangsposition, kann der Zeitpunkt der Positionierung des Sensors an der Windschutzscheibe in einer zweiten Endposition variabel gewählt werden. Die Verlagerung des Sensors von seiner ersten Vormontageposition (Ausgangsposition) in eine zweite Anlageposition (Endposition) kann wieder rückgängig gemacht und beliebig oft wiederholt werden.

Das Verzögerungselement kann weiterhin ein Dämpfungselement umfassen oder als Dämpfungselement ausgebildet sein. Hierdurch wird ein Vorschnellen des Sensors an die Windschutzscheibe verhindert und es wird somit eine behutsame Positionierung des Sensors möglich.

Die Erfindung sowie bevorzugte Ausführungsbeispiele sind in den Zeichnungen dargestellt und werden nachfolgend anhand der Beschreibung näher erläutert.

Es zeigt:
- Fig.1 1: eine schematische Darstellung eines Sensormoduls in Schnittdarstellung, wobei der Sensor in seiner Ausgangsposition gezeigt ist,
- Fig.2: eine Schnittdarstellung des Sensormoduls nach Fig. 1, wobei der Sensor in seiner Endposition gezeigt ist,
- Fig.3: eine schematische Darstellung einer weiteren nich-erfindungsgemäßen Ausführungsform eines Sensormoduls in Schnittdarstellung

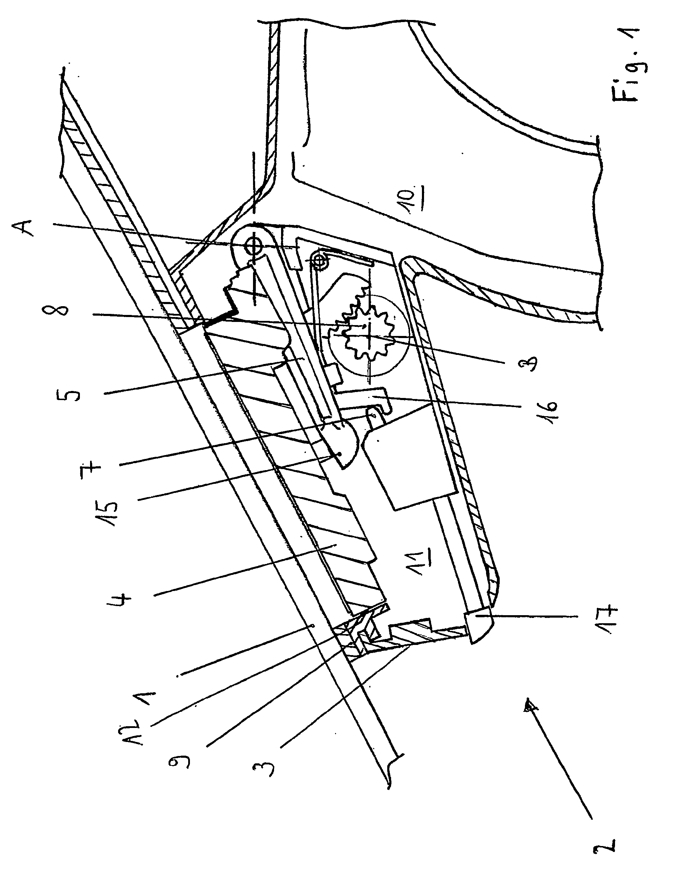

In Fig. 1 ist schematisch ein Ausschnitt einer Glasscheibe 1, insbesondere einer Windschutzscheibe eines Kraftfahrzeugs, mit daran anliegendem Sensormodul 2 dargestellt. Das Sensormodul 2 umfasst im Wesentlichen ein Modulgehäuse 3, einen Sensor 4, ein Stellelement 5, ein Federelement 6, ein Arretierelement 7 und ein Verzögerungselement 8 . Damit das Sensormodul 2 ordnungsgemäß arbeitet, muss das Modulgehäuse 3 in einer festen Position relativ zur Windschutzscheiben- Innenoberfläche verbleiben. Das Modulgehäuse 3 weist daher an seinen der Innenoberfläche zugewandten Seite Anlageflächen oder Dichtflächen 9 auf. Zwecks Anbringung des Modulgehäuses 3 vorzugsweise im Bereich naheliegend der oberen Scheibenkante, weist das Modulgehäuse 3 einen Befestigungsabschnitt 10 auf, der entweder unmittelbar an dem Dachhimmel oder karosserieseitig am Scheibenrahmen befestigt werden kann. Eine weitere Möglichkeit der Anbringung besteht darin, den Befestigungsabschnitt 10 auf dem Rahmen einer am Dachhimmel angebrachten Dachbedieneinheit zu montieren. Hierdurch kann eine anschlussfertige Dachbedieneinheit zur Montage in den Fahrzeuginnenraum einschließlich eines integrierten Sensors bereitgestellt werden. Das Ausführungsbeispiel wird nachfolgend anhand eines im Sensormodul 2 angeordneten Regensensors beschrieben. Es können allerdings auch folgende andere Sensoren im Sensormodul angeordnet sein: Lichtsensoren, Temperatursensoren ....

Das Modulgehäuse 3 weist einseitig auf der der Innenoberfläche der Windschutzscheibe zugewandten Seite eine Öffnung auf, die in einen Aufnahmeraum 11 mündet. In der Öffnung ist ein Führungselement 12 eingefügt, in dem der Sensor 4 gelagert ist. Die Begrenzungsflächen des Führungselementes 12 sind als Führungsflächen für den Sensor 4 ausgebildet. Die Fig. 1 zeigt den Sensor 4 in einer ersten Ausgangsposition, in dieser ist die Meßfläche des Sensors 4 mit einem Abstand zu der Innenoberfläche der Scheibe angeordnet. Der Sensor 4 ist auf einem Sensorträger 13 angeordnet, der auf seiner dem Sensor 4 abgewandten Seite einen Kugelkopf 14 aufweist. Der Kugelkopf 14 ist in einer entsprechenden an einem Stellelement 5 angeordneten Kugelpfanne 15 aufgenommen. Somit ist der Sensor 4 auf dem Stellelement 5 gelenkig gelagert. Durch diese gelenkige Lagerung des Sensors 4 an dem Stellelement 5 kann in jedem Fall eine korrekte Kippstellung des Sensors d.h. vollflächige Anlage der Messfläche des Sensors 4 an der Innenoberfläche der Scheibe 1 sichergestellt werden. Das Stellelement 5 ist als um eine Drehachse A gelagerter Hebel ausgebildet. Die Lagerachse ist im Bereich der Innenseite des Aufnahmeraums 11 festgelegt. Aus der Zeichnung ist weiterhin zu ersehen, dass unterhalb des Stellelementes 5 eine Schenkelfeder 6 angeordnet ist. Durch die Anordnung der Feder 6 wird die für die Funktion des Sensors erforderliche Andrückkraft erzeugt. Die Schenkelfeder ist als spiralförmiger Federdraht, der in hebelartigen Schenkeln endet, ausgebildet. Ein Schenkel stützt sich an der Unterseite des Hebels ab, der andere Hebel stützt sich an der Innenseite des Modulgehäuses 3 ab. Der Hebel ist durch die obenstehend beschriebene Anordnung in Richtung auf die Windschutzscheibe 1 vorgespannt. Ein nach oben Verschwenken des Hebels wird durch ein Arretierelement 7 blockiert. Das Arretierelement 7 ist als bewegbarer Stift ausgebildet, der eine im vorderen Bereich des Hebels nach unten weisende Sperrklinke 16 hintergreift.

Diese Arretierung kann über ein durch die Seitenwand des Modulgehäuses 3 nach außen ragendes Entriegelungselement 17 aufgehoben werden. Nach Betätigung des Entriegelungselementes 17 wird ein Vorschnellen des durch die Federkraft vorgespannten Hebels mit gelenkig am Hebel gelagertem Sensor 4 durch ein im Modulgehäuse 3 angeordnetes Verzögerungselement 8 verhindert. Das Verzögerungselement 8 ist hierbei als Dämpfungselement ausgebildet und umfasst gemäß dem dargestellten Ausführungsbeispiel eine um eine Drehachse B gelagerte Reibbremse mit Reibflächen aus Silikon. Die Reibbremse ist hierfür als Zahnrad ausgebildet, dass in einem an dem Hebel angeordnetem bogenförmig verlaufenden Zahnsegment kämmt. Durch diese Ausbildung wird eine gedämpfte Stellbewegung des Sensors 4 in Richtung auf die Windschutzscheibe erzeugt. Die Gefahr einer Beschädigung des Sensors 4 durch Anschlagen an die Scheibe wird dadurch erheblich reduziert. Eine Führung des Sensors 4 in Richtung auf die Windschutzscheibe wird durch die Führungsflächen am Führungselement 12 erzielt.

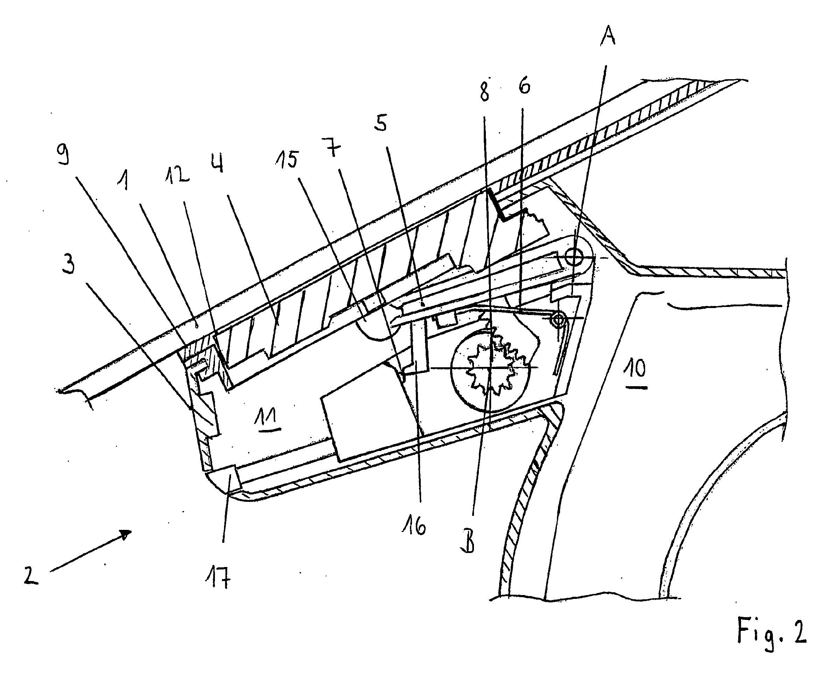

In Fig. 2 ist das Sensormodul 2 mit Sensor 4 in einer zweiten Endposition gezeigt. Die Messfläche des Sensors 4 liegt hierbei mit einer definierten und durch die Feder vorgegebenen Kraft an der Innenoberfläche der Windschutzscheibe 1 an.

Die zuvor beschriebene Entriegelung bzw. Verriegelung des Sensors 4 kann hierbei rein mechanisch oder auch elektromechanisch mittels elektrischen Schaltsignals erfolgen. Bei der zuvor beschriebenen Ausführung des Entriegelungselementes 17, steht dieser in der Montagestellung aus dem Modulgehäuse 3 hervor und ist mit einer Signalfarbe versehen. Somit kann optisch erkannt werden, in welcher Position sich der Sensor 4 befindet. Die mechanische Auslösung der zuvor beschriebenen auf den Sensor 4 übertragenen Stellbewegung kann auch durch ein elektrisch betriebenes Arretierelement erfolgen. Hierbei kann ein Zeitglied vorgesehen sein, welches nach einer vorbestimmten Zeit, die Stellbewegung des Sensors 4 von der Ausgangsposition in die Endposition freigibt. Das Zeitglied stellt somit ebenfalls ein Verzögerungselement dar. In einer weiteren Ausführung kann der Sensor 4 z.B. für Montagezwecke mit Hilfe eines Elektromotors in die Ausgangsstellung zurückgestellt werden.

Durch die oben beschriebene Anordnung kann die Arretierung sowie die Entriegelung des Stellelementes 5 beliebig oft wiederholt werden. Ein weiterer Vorteil besteht darin, dass der Zeitpunkt der Entriegelung frei gewählt werden kann. Damit kann der Zeitpunkt des Kontaktes des Sensors 4 an der Windschutzscheibe 1 und damit die Beaufschlagung der Windschutzscheibe 1 durch die Kontakt- und Montagekräfte bei Erstmontage und im Servicefall frei gewählt werden. Dies ist zweckmäßig ein Zeitpunkt, der nach dem Aushärten der Klebeverbindung zwischen Windschutzscheibe 1 und Fahrzeugkarosse liegt.

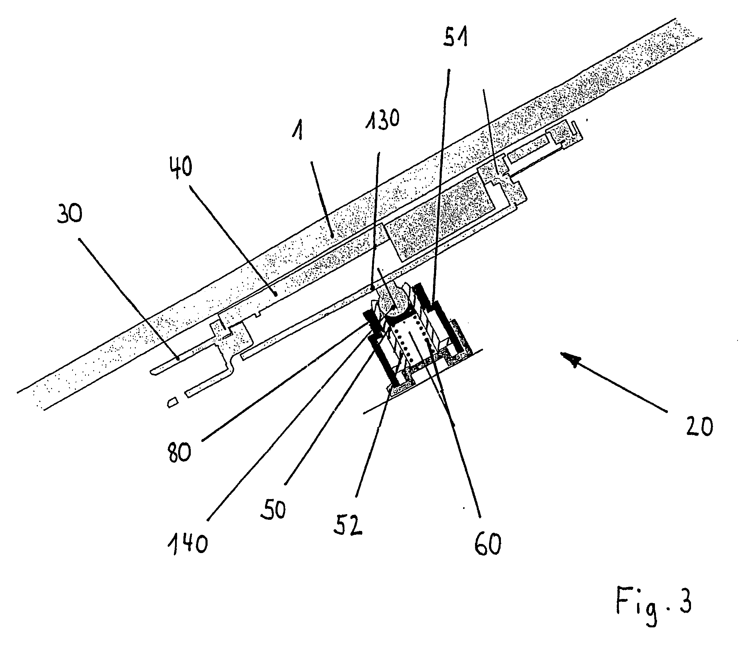

In Fig.3 ist ein nich-erfindungsgemäßes Sensormodul 20 in einer Ausgestaltung gezeigt. Im Unterschied zu dem in den Figuren 1 und 2 dargestellten Ausführungsbeispiel ist hier das Stellelement 50 als Kolben-Zylinder-Anordnung ausgebildet. Der in einem Zylindergehäuse 51 verschieblich gelagerte Kolben 52 ist hier hohlzylindrisch ausgebildet und weist in seinem oberen Endbereich die Lagerung des Kugelkopfes 140 auf. Im Kolben 52 ist das Federelement 60 angeordnet, welches als übliche Druckfeder ausgebildet ist und sich einerseits am Bodenbereich des Zylindergehäuses 51 und andererseits an einem mit dem Kolben 52 verbundenen Lagerelement abstützt. Der Kolben 52 ist durch die obenstehend beschriebene Anordnung in Richtung auf die Windschutzscheibe 1 vorgespannt. Eine Verschiebung des Kolbens 52 in dem Zylindergehäuse 51 in die zweite Endposition des Sensors 40 wird durch ein Arretierelement blockiert. Dies ist in der Zeichnung nicht dargestellt. Zu den weiteren Ausgestaltungen des Arretierelementes sowie eines Verzögerungselementes in Ausgestaltung eines Zeitgliedes, wird auf die Beschreibung der Fig. 1 und 2 verwiesen.

Im oberen Bereich des Zylindergehäuses 51, in dem der Kolben 52 durch das Zylindergehäuse 51 nach außen geführt ist, ist zwischen Zylindergehäuse-Innenfläche und Kolbenaußenfläche ein Dichtungsring aus einem elastischen Material eingefügt. Der Dichtungsring hat hierbei die Funktion des Dämpfungs- bzw. Verzögerungselementes 80, so dass die Stellbewegung von der Ausgangsposition des Sensors 40 in die Endposition aufgrund der Reibung gedämpft und zeitverzögert erfolgt.

Das Sensormodul kann wie nachfolgend beschrieben mit geringen Montagerisiken und Montagekosten im oberen Bereich der Windschutzscheibe positioniert und elektrisch kontaktiert werden.

In einem ersten Schritt kann das komplette Sensormodul als anschlussfertige Dachbedieneinheit zur Montage in den Fahrzeuginnenraum fertig gestellt werden. Hierdurch wird eine Vormontage der Dachbedieneinheit mit integriertem Sensor außerhalb des Fahrzeuginnenraums möglich. Parallel hierzu kann die Fahrzeugmontage erfolgen und die Windschutzscheibe wird in der Karosse verklebt. Nach der Verklebung der Windschutzscheibe kann das Sensormodul über den Befestigungsabschnitt am Dachhimmel befestigt und elektrisch angeschlossen werden. Nachdem die Klebeverbindung Windschutzscheibe/Karosse ausgehärtet ist, kann die Auslösung der Verriegelung des Stellelementes manuell oder über ein Zeitglied gesteuert erfolgen und der Sensor wird aufgrund des vorgespannten Stellelementes und der Führung des Sensors in seine Endposition bewegt. Somit werden Montagefehler und eine Veränderung der Klebeposition der Windschutzscheibe in der Karosse nach der Positionierung des Sensors verhindert. Ein zusätzlich angeordnetes Dämpfungselement in Form einer Reibbremse, einer hydraulischen Dämpfung oder bspsw. eines Reibbelags zwischen den relativ zueinander bewegten Elementen bei der Stellbewegung, verhindert ein Vorschnellen des Sensors an die Windschutzscheibe. Damit wird eine Beschädigung des Sensors weitgehend vermieden. Die gelenkige Lagerung des Sensors an dem Stellelement ermöglicht eine exakte Anlage der Messfläche des Sensors an der Windschutzscheibe.

## Patentansprüche

1. Sensormodul (2,20) zur lösbaren Anbringung eines Sensors (4,40) an einer Scheibe (1) eines Kraftfahrzeugs, wobei das Sensormodul (2,20) über ein an einem Modulgehäuse (3,30) angeordneten Befestigungsabschnitt (10) mit einem karosseriefesten oder einem mit einem karosseriefesten Teil In Verbindung stehenden Element verbindbar ist, wobei in dem Modulgehäuse (3,30) ein Sensor (4,40) aufgenommen ist, der von einer ersten Ausgangsposition in eine zweite Endposition zur Anlage an der Scheibe (1) verschwenkbar gehalten ist, und diese Stellbewegung Ober ein Stellelement (5,50) einleitbar ist,
und das Stellelement (5,50) mittels eines Federelementes (6,60) in Richtung auf die Endposition vorspannbar und in der Ausgangsposition über ein Arretierelement (7) arretierbar ist, **dadurch gekennzeichnet, dass** ein Dämpfungselement (8) vorgesehen ist, durch welches eine gedämpfte Stellbewegung des Sensors (4) in Richtung der Scheibe (1) erzeugbar ist,und, das Stelllelement (5) als drehbar gelagerter Hebel ausgebildet ist.

2. Sensormodul nach Anspruch 1 , wobei der Sensor (4,40) gelenkig mit dem Stellelement (5,50) verbunden ist.

3. Sensormodul nach Anspruch 2, wobei die gelenkige Verbindung einen in einer Gelenkpfanne(1 5)elagerten Kugelkopf (14) umfasst.

4. Sensormodul nach einem der vorangehenden Ansprüche, wobei das Federelement (6) eine Schenkelfeder ist, die sich einerseits mit einem Schenkel an der Unterseite des Hebels und andererseits mit einem Schenkel an dem Modulgehäuse abstützt.

5. Sensormodul nach einem der vorangehenden Anspruch, wobei das Arretierelement (7) als horizontal bewegbarer Stift ausgebildet ist, der eine im vorderen Bereich des Hebels nach unten weisende Sperrklinke (16) hintergreift.

6. Sensormodul nach einem der vorangehenden Ansprüche, wobei das Dämpfungselement (8) als Reibbremse ausgebildet ist und ein am Modulgehäuse mit einem Reibbelag versehenes Zahnrad umfasst, welches in einen am Stellelement (5) angeordneten Zahnkamm eingreift.

7. Sensormodul nach einem der vorangehenden Ansprüche, wobei ein Zeitglied vorgesehen ist, welches nach einer vorbestimmten Zeit, die Stellbewegung des Sensors (4) von der Ausgangsposition in die Endposition freigibt.

## Claims

1. Sensor module (2, 20) for releasable attachment of a sensor (4, 40) to a window (1) of a motor vehicle, wherein the sensor module (2, 20) is connectable via a fastening section (10) arranged on a module housing (3, 30) to an element which is fixed to the vehicle body or is connected to a part fixed to the vehicle body, a sensor (4, 40) being accommodated in the module housing (3, 30) and being held swivelably from a first starting position to a second end position in order to rest against the window (1), this adjusting movement being able to be initiated by means of an adjusting element (5, 50) and the adjusting element (5, 50) being preloadable in the direction of the end position by means of a spring element (6, 60) and being blockable in the starting position by means of a blocking element (7), **characterized in that** a damping element (8) is provided by which a damped adjusting movement of the sensor (4) in direction of the window (1) can be produced, and the adjusting element (5) is in the form of a pivoted lever.

2. Sensor module according to Claim 1 wherein the sensor (4, 40) is connected to the adjusting element (5, 50) by an articulated joint.

3. Sensor module according to Claim 2, wherein the articulated connection comprises a ball head (14) mounted in a joint socket (15).

4. Sensor module according to any one of the preceding claims, wherein the spring element (6) is a torsion spring, one arm of which bears against the underside of the lever and the other arm of which bears against the module housing.

5. Sensor module according to any one of the preceding claims, wherein the blocking element (7) is in the form of a horizontally movable pin which engages behind a downwardly-oriented blocking catch (16) in the front region of the lever.

6. Sensor module according to any one of the preceding claims, wherein the damping element (8) is in the form of a friction brake and comprises a gearwheel provided with a friction lining on the module housing, which gearwheel meshes with a toothed member arranged on the adjusting element (5).

7. Sensor module according to any one of the preceding claims, wherein a timing element is provided which releases the adjusting movement of the sensor (4) from the starting position to the end position after a predetermined time.

## Revendications

1. Module de détecteur (2, 20) permettant d'installer de manière libérable un détecteur (4, 40) sur une vitre (1) d'un véhicule automobile, le module de détecteur (2, 20) pouvant être relié à la carrosserie ou à un élément relié à une partie fixe de la carrosserie par l'intermédiaire d'une partie de fixation (10) disposée sur un boîtier (3, 30) du module, un détecteur (4, 40) qui est maintenu de manière à pouvoir pivoter depuis une première position initiale jusque dans une deuxième position finale venant se placer sur la vitre (1), ce déplacement de positionnement pouvant être amené par un élément de positionnement (5, 50), l'élément de positionnement (5, 50) pouvant être précontraint en direction de la position finale au moyen d'un élément élastique (6, 60) et pouvant être bloqué dans la position initiale par un élément de blocage (7),
**caractérisé en ce que**
le module de détecteur présente un élément d'amortissement (8) qui permet d'obtenir un déplacement amorti de positionnement du détecteur (4) en direction de la vitre (1) et **en ce que** l'élément de positionnement (5) est configuré comme levier monté à rotation.

2. Module de détecteur selon la revendication 1, dans lequel le détecteur (4, 40) est relié de manière articulée à l'élément de positionnement (5, 50).

3. Module de détecteur selon la revendication 2, dans lequel la liaison articulée comporte une tête sphérique (14) montée dans une calotte d'articulation (15).

4. Module de détecteur selon l'une des revendications précédentes, dans lequel l'élément élastique (6) est un ressort à branches dont une branche s'appuie d'un côté sur le côté inférieur du levier et une branche s'appuie de l'autre côté sur le boîtier du module.

5. Module de détecteur selon l'une des revendications précédentes, dans lequel l'élément de blocage (7) est configuré comme tige mobile horizontalement qui accroche par l'arrière un cliquet de blocage (16) orienté vers le bas et prévu dans la partie avant du levier.

6. Module de détecteur selon l'une des revendications précédentes, dans lequel l'élément d'amortissement (8) est configuré comme frein à friction et comporte sur le boîtier du module une roue dentée dotée d'une garniture de frottement et qui engage une crémaillère disposée sur l'élément de positionnement (5).

7. Module de détecteur selon l'une des revendications précédentes, dans lequel un organe de temporisation est prévu et libère après une durée prédéterminée le déplacement de positionnement du détecteur (4) depuis la position initiale jusque dans la position finale.
